# EUROPEAN PATENT SPECIFICATION

(11) **EP 0 726 329 B1**
(45) Date of publication and mention of the grant of the patent: **07.06.2000**
(21) Application number: 96300785.1
(22) Date of filing: 06.02.1996
(51) Int. Cl.: C22B 61/00, G21C 19/46

(54) **A method for separating technetium and apparatus therefor**
Verfahren und Gerät zur Abtrennung von Technetium
Procédé et appareil pour la séparation de technétium

(30) Priority: 09.02.1995 JP 2148395
(43) Date of publication of application: 14.08.1996
(73) Proprietor: Hitachi, Ltd., Chiyoda-ku, Tokyo 101 (JP)
(72) Inventor: Fukasawa, Tetsuo, Hitachi-shi, Ibaraki 316 (JP); Miura, Noboru, Hitachi-shi, Ibaraki 316 (JP); Kawamura, Fumio, Mito-shi, Ibaraki 310 (JP); Kamoshida, Mamoru, Naka-gun, Ibaraki 311-01 (JP)
(74) Representative: Paget, Hugh Charles Edward

(56) References cited:
- EP-A- 0 535 837
- FR-A- 2 593 494
- GB-A- 2 011 696
- US-A- 4 738 834
- US-A- 4 764 352
- PATENT ABSTRACTS OF JAPAN vol. 017, no. 654 (P-1653), 3 December 1993 & JP-A-05 215895 (HITACHI LTD), 27 August 1993,
- PATENT ABSTRACTS OF JAPAN vol. 014, no. 236 (C-0720), 18 May 1990 & JP-A-02 059433 (JAPAN ATOM ENERGY RES INST), 28 February 1990,
- DATABASE WPI Section Ch, Week 8409 Derwent Publications Ltd., London, GB; Class E31, AN 84-054332 XP002003918 & SU-A-980 396 (MOSCOW LOMONOSOV UNIV) , 23 May 1983

## Description

The present invention relates to a method for separating and eliminating technetium from a solution containing radioactive nuclides. The solution containing radioactive nuclides is radioactive liquid waste generated from nuclear power stations, reprocessing plants, radioactive isotope handling facilities, and other nuclear power facilities, for example.

By conventional methods for separating technetium, technetium in liquid waste was separated by a solvent extraction method or a fused salt extraction method and eliminated as disclosed in JP-A-54-96412 (1979), JP-A-62-3694 (1987), JP-A-5-188188 (1993), and JP-A-4-204293 (1992). Further, ion exchange methods, or ion adsorption methods were adopted as disclosed in JP-A-60-194399 (1985), JP-A-5-66289 (1993), JP-A-1-215727 (1989), and JP-A-2-54732 (1990).

JP-A-5-52995 (1993) disclosed an oxidizing volatilization method, JP-A-5-100085 (1993) disclosed a combined process of an anion exchange method and a method for reducing to oxides and precipitation, and JP-A-5-209998 (1993) disclosed a combined process of a method for reducing to oxides and a method for electrolytic deposition of coexisting metals with the aim of eliminating technetium from the coexisting metals, respectively.

Furthermore, JP-A-62-93320 (1987) disclosed a method for recovering technetium by heating the technetium with a reducing agent (formic acid) and a platinum group element, and JP-A-5-215895 (1993) disclosed a method for recovering technetium and ruthenium concurrently by adding SiC and alcohol as a reducing agent and a reducing assistant agent respectively.

In accordance with the prior art described above, a large amount of solvent, fused salt, ion exchange body (resins), and adsorbents (active carbon) were required. The volatilization method required an oxidant and sulfuric acid, and the combined processes required complex operations and processes. Furthermore, the coexistence of platinum group elements such as ruthenium was required. Heating operation, solid reducing agents, and solid reducing assistant agent were necessary.

One of the objects of the present invention is to provide a method for separating technetium, which can reduce a generated amount of secondary waste remarkably, and an apparatus therefor.

Another of the objects of the present invention is to provide a method for separating technetium with an enhanced reducing reaction, and an apparatus therefor.

Another of the objects of the present invention is to provide a method for separating technetium with a simple composition of apparatus, and an apparatus thereof.

Another of the objects of the present invention is to provide a method for separating technetium with a remarkable reducing reaction which can reduce an amount of secondary waste generation significantly, and an apparatus therefor.

Another of the objects of the present invention is to provide a method for separating technetium to recover solid state technetium with a preferable recovering efficiency, and an apparatus therefor.

Another of the objects of the present invention is to provide a method for separating technetium which can reduce a consumed amount of catalyst, and an apparatus therefor.

The present invention proposes a method according to claim 1.

Technetium in the radioactive liquid waste can be reduced to metallic technetium effectively by effects of the catalyst and a reducing agent. Accordingly, concentration of technetium in the radioactive liquid waste after removing the metallic technetium decreases remarkably.

Although the reducing agent is a weak reducing agent, it can proceed the reducing reaction of technetium by the enhancing effect of the catalyst. The catalyst can enhance the reducing reaction of technetium to a solid state. The enhancing effect of the catalyst to the reducing reaction is based on adsorbing hydrogen onto surface of the catalyst, and reacting the hydrogen with technetium. The reducing agent is preferably metal-free (metal salt free) and is decomposed to gaseous components such as nitrogen, carbon dioxide and the like by a reaction with technetium or positive holes.

Preferably, the method uses a photocatalyst as the catalyst, and irradiates the radioactive liquid waste containing the reducing agent and the photocatalyst with electromagnetic waves.

Because of using the photocatalyst, the reducing reaction of technetium is enhanced more than a case when the photocatalyst is not used. The solid state technetium can be adsorbed rapidly onto the photocatalyst. Therefore, technetium in radioactive liquid waste can be removed effectively.

The photocatalyst emits electrons by irradiation with electromagnetic waves to enhance the reducing reaction of technetium. Furthermore, the photocatalyst adsorbs hydrogen (atoms) at its surface, and enhances the reducing reaction by making the hydrogen react with technetium. The electromagnetic waves have a role to emit electrons and apparent positive holes from the photocatalyst. The electrons reduce technetium directly or indirectly, and the positive holes are consumed by the reducing agent or electron donors.

Furthermore, another feature of the present invention is in supplying radioactive liquid waste containing a salt free reagent into a column filled with catalyst.

Accordingly, a composition of apparatus can be simplified significantly. Furthermore, technetium in radioactive liquid waste can be reduced and removed continuously by relatively simple operation.

Because the salt reducing agent contains nitrogen and hydrogen, the reducing reaction of the agent is remarkable. Accordingly, technetium can be reduced effectively with relatively a small amount of reducing agent. And an amount of secondary waste generation can be decreased as much as the amount of saved reducing agent.

A preferred feature of the invention is adsorbing the solid state technetium onto catalyst. As the solid state technetium generated by the reducing reaction is adsorbed by the catalyst, a recovery efficiency of solid state technetium from the radioactive liquid waste can be improved.

Furthermore, preferably the present invention includes the steps of holding the radioactive liquid waste containing the catalyst and the reducing agent in a vessel, reducing technetium contained in the radioactive liquid waste to a solid state, subsequently, removing the catalyst and the solid state technetium from the radioactive liquid waste which is released from said vessel, supplying raw radioactive liquid waste the vessel, and contacting the raw radioactive liquid waste with the previously removed catalyst and the solid state technetium.

The catalyst removed from the released radioactive liquid waste can be re-used for the raw radioactive liquid waste, and accordingly, consuming amount of the catalyst can be decreased.

Preferably the present invention includes the steps of removing the catalyst and the solid state technetium from the released radioactive liquid waste by filtration with a filter, and introducing the removed catalyst and solid state technetium in the vessel by the raw radioactive liquid waste which is supplied into the vessel through the filter.

Because the catalyst removed by the filter is introduced in the vessel by utilizing the raw radioactive liquid waste which is supplied through the filter, the removed catalyst can be return into the vessel readily. As the removed catalyst is re-used in the vessel, it is not necessary to install a new apparatus.

Preferably the present invention includes the steps of removing the catalyst and the solid state technetium from the released radioactive liquid waste by filtration with a filter which is arranged in the vicinity of liquid waste outlet at the bottom portion of said vessel, introducing the raw radioactive liquid waste into the vessel, subsequently mixing the catalyst and the solid state technetium which are removed by the filter with the raw radioactive liquid waste by agitating the raw radioactive liquid waste.

Similarly to the above described case wherein the catalyst which is removed by the filter is introduced into the vessel by utilizing the raw radioactive liquid waste, the removed catalyst can be returned into the vessel readily. Therefore, no new apparatus is necessary for returning the removed catalyst into the vessel.
FIG. 1 is an illustration indicating the composition of the Tc separation apparatus in the embodiment 1 of the present invention,
FIG. 2 is a characteristic graph indicating a time dependent of residual amount of Tc in nitric acid solution,
FIG. 3 is an illustration indicating the composition of the Tc separation apparatus in one of other embodiments of the present invention,
FIG. 4 is an illustration indicating the composition of the Tc separation apparatus in further one of other embodiments, and
FIG. 5 is an illustration indicating the composition of the Tc separation apparatus in further one of other embodiments.

Hereinafter, embodiments of the present invention are explained, by way of example.

### Embodiment 1

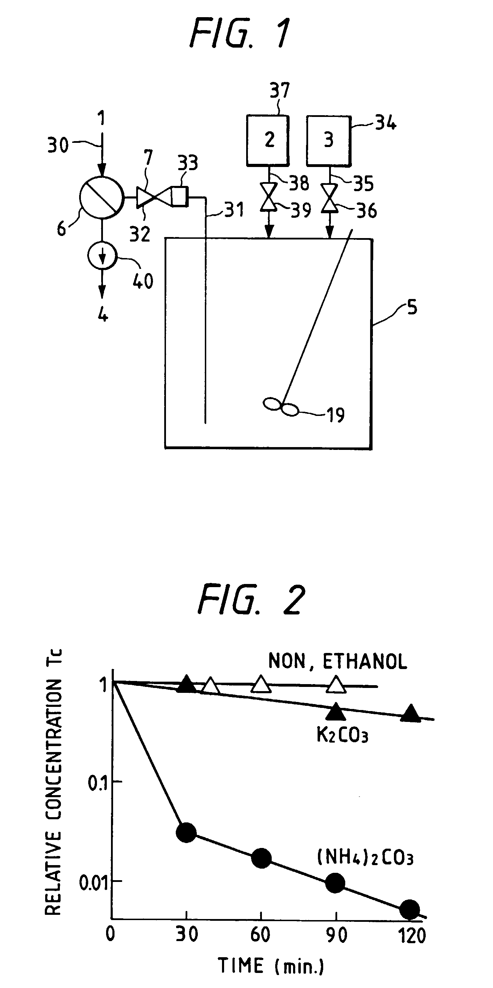

As the first embodiment of the present invention, a method for separating technetium from high level radioactive liquid waste generated from reprocessing of spent nuclear fuel is explained hereinafter referring to FIG.1.

A switching valve 6 is provided to a piping system 30. The piping 31 connected to the switching valve 6 is inserted into a liquid waste processing vessel 5. A valve with filter 7 is provided to the piping 31. The valve with filter 7 comprises a valve portion 32 and a filter portion 33 which locates in downstream position from the valve portion 32. A pump 40 is provided to the piping 30 in downstream position from the switching valve 6. A reducing agent vessel 37 filled with the reducing agent 2 is connected to the liquid waste processing vessel 5 by piping 38. A valve 39 is provided to piping 38. A catalyst vessel 34 filled with catalyst 3 is connected to the liquid waste processing vessel 5 with piping 35. A valve 36 is provided to the piping 35.

The high level radioactive liquid waste 1 generated from spent nuclear fuel reprocessing plants (not shown in the figure) contains radioactive nuclides such as fission products as ⁹⁰Sr, ⁹⁹Tc, ¹³⁷Cs, and ¹⁴⁴Ce, and transuranium elements as ²³⁷Np, and ²⁴¹Am. The high level radioactive liquid waste 1 is introduced into a liquid waste processing vessel 5 by switching the switching valve 6 to the liquid waste processing vessel 5 (to inlet). Subsequently, the reducing agent 2 and the catalyst 3 are added into the liquid waste processing vessel 5 by opening the valves 39 and 36. The liquid waste in the liquid waste processing vessel 5 is agitated by an agitator 19 . For instance, ammonium carbonate, and the like can be used as the reducing agents 2, and platinum black and the like can be used as the catalyst 3. Ammonium carbonate exists in the solution, i.e. the high level liquid waste, in a condition of a carbonic acid ion and an ammonium ion. After 1-2 hours agitation, the technetium in the high level liquid waste is reduced to a tetravalent or a non-valent solid state (oxide or metal) from a heptavalent ionic state (four oxygen atoms are coordinated to form a negative monovalent anionic state as a whole). Concentration of nitric acid in the high level liquid waste 1 is about 3 mol/liter. Generally speaking, reduction of technetium in an acidic solution of such a high acidic concentration is difficult. However, the inventors discovered that, under the coexistence of the catalyst, the above reducing agent can reduce technetium sufficiently. The above reducing agent is decomposed to gaseous components after the reaction. The reducing agent is a substance which has a function to reduce a target substance by releasing hydrogen or electrons by itself. An assistant reducing agent is- a substance which has a function to prevent a reverse reaction of the reducing reaction, that is, an oxidation reaction.

After technetium is reduced, the switching valve 6 is switched so that the valve provided with filter 7 and the pump 40 is connected under a condition that the valve portion 32 is keeping open, and the pump is operated. The processed liquid waste 4 in the liquid waste processing vessel 5 is released passing through the valve provided with filter 7 and the switching valve 6. The filter portion 33 of the valve provided with filter 7 catches the catalyst and the solid state technetium, and prevents them from releasing outside with the processed liquid waste 4. As for the solid-liquid separation filter using at the filter portion 33, filtrating mechanism such as sintered metal filter and hollow fiber membrane are effective. The catalyst and the solid state technetium remained on the filter (at - the processing vessel side) are reversely washed into the processing vessel 5 when subsequent high level radioactive liquid waste 1 is introduced into the processing vessel 5. The catalyst can be used repeatedly as described above, and finally, reversely washed with a cleaning agent such as demineralized water, and is recovered with the solid state technetium. The catalyst and the technetium can be separated by re-dissolving the technetium. After separating the technetium as described above, the catalyst can be re-used in the reducing and separating process of technetium contained in the high level liquid waste or other purposes.

Accordingly, the technetium in the high level liquid waste can be recovered finally as a small amount of solution. In the present embodiment, the catalyst can be used repeatedly. Therefore, the amount of generated secondary waste can be suppressed to a minimum. That means, the volumetric amount of the high level liquid waste is not changed, and the volume of recovered technetium is remarkably small.

Ammonium carbonate, which is used as a reducing agent in the present embodiment, contains hydrogen and nitrogen, and has a strong reducing effect. Therefore, in accordance with the present embodiment, the technetium in the high level liquid waste 1 can be reduced effectively with a small amount of ammonium carbonate, the removed amount of the solid state technetium at the filter portion 33 is increased, and the generated amount of the secondary waste is decreased. Furthermore, the radioactive level of the processed liquid waste can be decreased.

Advantages of the present embodiment is explained referring to FIG. 2. FIG. 2 is a graph indicating a relationship between residual concentration (relative value) of technetium in the liquid waste and elapsing time when applying the present embodiment and other reference processes to a 3 mol/liter nitric acid aqueous solution wherein technetium ions exist as same as the high level liquid waste 1. After adding the catalyst to the above technetium solution, various agents were respectively added to the solution for determining their effects. As the result, the following findings were obtained. When any agents are not added to the solution other than the catalyst, or only ethanol is added to the solution in addition to the catalyst, the technetium concentration in the solution does not change. That means, in the above described cases, the reducing reaction of technetium does not proceed, and the technetium exists stably as ions in the solution. It was revealed that adding any reagent (reducing agent) was necessary for reducing technetium, but addition of only ethanol was insufficient. When potassium carbonate was added as the reducing agent, the concentration of technetium in the solution decreased steadily but slowly. Therefore, it was revealed that technetium was separated and recovered slowly as a solid body from the solution. When ammonium carbonate was added to the solution, the concentration of technetium in the solution decreased relatively fast as indicated in FIG. 2. Therefore, it was revealed that technetium could be recovered effectively from a nitric acid aqueous solution by adding the catalyst and ammonium carbonate.

In accordance with the experimental result indicated in FIG. 2, a recovery mechanism of technetium is considered as following. Because the recovery (reduction) of technetium proceeds in the presence of an ammonium salt, the reducing reaction is considered to be controlled by a reducing effect of ammonium ion (ammonia) itself, or a reducing effect of hydrogen in the ammonium ion. Especially, it is well known that hydrogen is adsorbed onto the catalyst such as platinum in an atomic state, and the hydrogen reacts to reduce dissolved substance. Therefore, the hydrogen has a sufficient capability to reduce technetium. Because hydroxylamine nitrate has the same effect as ammonium carbonate, it was revealed that a substance (reagent) capable of reducing reaction, or a substance (reagent) having hydrogen contributed to the reducing reaction of technetium, forming a solid state technetium, and recovering of technetium from the solution. Therefore, an existence of the above substance and the catalyst is indispensable condition for reducing and recovering technetium.

Various kinds of nuclides are contained in the high level liquid waste 1. Most of the nuclides do not disturb the reducing reaction and recovering of technetium. Only a few nuclides consume the reducing agents (competitive with the reducing reaction of technetium). However, the consumption of the reducing agents does not cause any problem if an excessive amount of the reducing agent is added to the solution.

In accordance with the present embodiment, technetium, which has a long half-life (210 x 10³ years) and is significantly poisonous and mobile from a disposed place to other places with penetration of ground water after the disposal of waste, can be separated and eliminated from the high level liquid waste generated from reprocessing plants by a remarkably simple and convenient method. Accordingly, poisonous and dangerous character of waste caused by technetium can be eliminated. Furthermore, a volumetric amount of radioactive liquid waste or-radioactive waste which necessitates a long period control can be decreased. Furthermore, a period for controlling a large amount of radioactive liquid waste can be decreased remarkably, and an advantage to make the waste harmless in a short time can be realized.

Furthermore, technetium which is an useful element as catalyst or a preventing agent for shells from adhering to ship bodies can be recovered and re-used. If ruthenium, rhodium, and palladium coexist, the above elements can be recovered concurrently with technetium, and can be re-used as catalyst. The above useful elements can be mutually separated by a conventional well known method such as a method utilizing a potential difference of oxidation-reduction, and a method utilizing a difference in chemical characteristics.

In accordance with the present embodiment, the concentration of nitric acid is not decreased. Therefore, the amount of liquid waste to be processed, and the amount of liquid waste after the process are hardly increased. In accordance with the present embodiment, a piping system is used for both supplying the liquid waste to the processing vessel and releasing the processed liquid waste from the processing vessel. Furthermore, a filter is provided to the pipe at the middle of the piping system and the filter is reversely washed with supplying liquid waste. Therefore, the method and steps for separating technetium can be simplified, and the apparatus for the separation can be simple and small.

The catalyst which is removed from the released radioactive liquid waste by the filter portion 33 can be re-used for raw radioactive liquid waste, and accordingly, consumption of the catalyst can be decreased.

Furthermore, in accordance with the present embodiment, the catalyst which is removed by the filter portion 33 can be introduced into the vessel 4 by utilizing raw radioactive liquid waste supplied into the catalyst vessel 34 through the filter portion 33, and accordingly, the removed catalyst can be returned into the catalyst vessel 34 readily. Therefore, it is not necessary to install any new apparatus for returning the removed catalyst into the catalyst vessel 34.

In the present embodiment, platinum was used as the catalyst. However, the same advantage can be realized by other catalysts, such as metallic ruthenium, metallic rhodium, metallic palladium, and the like. Furthermore, if separate piping systems are used respectively for supplying the high level liquid waste 1 to the liquid waste processing vessel 5 and for releasing the processed liquid waste 4 from the liquid waste processing vessel 5, contamination of the processed liquid waste with the liquid waste before the processing can be prevented completely even if the apparatus composition becomes somewhat complex. In the above case, the solid body remained on the filter must be eliminated by reversely washing with cleaning liquid other than the liquid waste, or by mechanical means. When the mechanical means is used, such advantages can be realized that an addition of the cleaning liquid and an increase in volume of the liquid waste can be avoided, the amount of water in the solid body can be decreased, and a process for eliminating moisture from the solid body can be omitted. The present embodiment indicated a case when the present invention was applied to the high level liquid waste from reprocessing plants. However, the same advantages can be realized when the present invention is applied to other liquid waste containing nitric acid (acidic).

### Embodiment 2

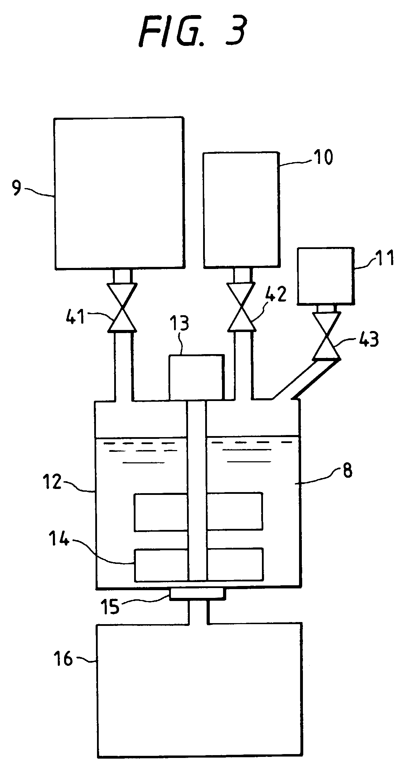

The second embodiment of the present invention is explained hereinafter on a case when the present invention is applied to low level radioactive liquid waste having low acidic concentration or neutral state referring to FIG. 3.

Low level radioactive liquid waste 8 is supplied to a liquid waste processing vessel 12 from a liquid waste supplying vessel 9 by opening a valve 41. Subsequently, a significantly weak reducing agent such as hydrazine nitrate (HN), and the like containing hydrogen and nitrogen, is supplied from a reducing agent supplying vessel 10 by opening a valve 42, catalyst such as titanium oxide and the like is supplied from a catalyst supplying vessel 11 by opening a valve 43, and an assistant reducing agent such as ethanol and the like is supplied from a storage tank (not shown in FIG. 3), to the liquid waste processing vessel 12, respectively. The amount of HN to be added is sufficiently small. Contact of technetium in the low level radioactive liquid waste 8 with the reducing agents and the catalyst is enhanced by rotating a agitator 14 connected directly to a motor 13, and a reducing reaction and adsorbing reaction onto the catalyst of the technetium is proceeded. After sufficiently the above reactions are proceeded, a valve portion of the valve provided with filter 15 is opened. The valve provided with filter 15 has a filter portion and the valve portion as same as the valve provided with filter 7. The filter portion locates closer position to the liquid waste processing vessel 12 than the valve portion. The processed liquid waste is transferred to a processed liquid waste receiving vessel 16 remaining solid components (catalyst adsorbing technetium) at surface of the filter. In accordance with the above described procedure, technetium is separated from the low level radioactive liquid waste 8. The present embodiment differs from the embodiment 1, the liquid waste in the present embodiment has a low acid concentration in comparison with the embodiment 1. Therefore, technetium ion can be reduced to a solid state in the presence of catalyst with very weak reducing agent such as HN. HN is decomposed to gaseous components and water after the reaction.

The catalyst and solid state technetium remained on the filter (at a side close to the liquid waste processing vessel) can be dispersed-into the liquid waste in the liquid waste processing vessel 12 by supplying the low level radioactive liquid waste 8 (and a reducing agent) 12 subsequent processing into the liquid waste processing vessel 12 and agitating the liquid waste. Therefore, the catalyst can be used repeatedly. Finally, the catalyst is recovered with technetium by supplying cleaning liquid (demineralized water, and the like) into the liquid waste processing vessel 12. A liquid-solid separation filter such as sintered metal filter and the like used at the filter portion is arranged at an even plane with the bottom of the liquid waste processing vessel 12, and the rotor blade 14 is arranged in the vicinity of the processing vessel bottom, or making the rotor have a structure which can be moved to close to the processing vessel bottom. In accordance with the above structure, the dispersion of the catalyst captured by the filter into the liquid waste can-be achieved effectively. Separation of the catalyst from technetium can be achieved by re-dissolution of the technetium. The catalyst can be re-used after separating the technetium for reducing and separating technetium in low level radioactive liquid waste again, or for other objects.

Accordingly, the same advantage as the embodiment 1 can be obtained by the present embodiment.

In the present embodiment, titanium oxide is used as the catalyst. However, the same advantage can be realized by other catalysts as well as the embodiment 1. Furthermore, the residual solid body on the filter is eliminated finally from the filter with cleaning liquid. However, it is possible to eliminate the residual solid body mechanically by moving the rotor blade as close to the filter as almost contact without adding the cleaning liquid. In the case of mechanical elimination of the residual solid body, such advantages can be realized that an addition of the cleaning liquid and an increase in volume of the liquid waste can be avoided, the amount of water in the solid body can be decreased, and a process for eliminating moisture from the solid body can be omitted. The present embodiment indicates an example when the present invention is applied to the low level liquid waste having an originally low acid concentration or neutral property, but the same advantages can be realized when the present invention is applied to high level liquid waste 1 containing nitric acid (acidic) generated after treating the liquid waste with an acid concentration decreasing operation. As for the acid concentration decreasing operation, such operations as denitration, and dilution are adoptable. Furthermore, the present embodiment can be applied to alkaline liquid waste with the same advantages.

The solid state technetium generated by the reducing reaction is adsorbed onto the titanium oxide, that is the catalyst, and accordingly, a recovery efficiency of the solid state technetium from the radioactive liquid waste can be improved.

### Embodiment 3

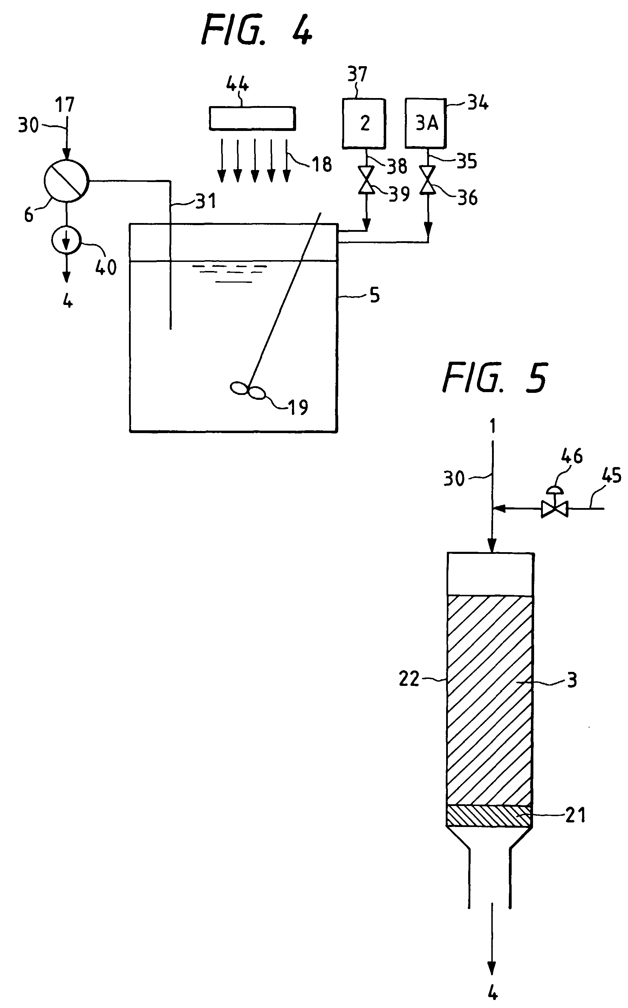

The third embodiment of the present invention is a case when technetium is recovered from acidic radioactive liquid waste by a method using light, and is explained hereinafter referring to FIG. 4.

The composition of the apparatus used in the present embodiment is the same composition of the apparatus used in the embodiment 1 except eliminating the valve provided with filter and adding a light irradiation apparatus (for instance, a Xenon lamp) 44. The reducing agent vessel 37 is filled with photocatalyst 3A.

Acidic radioactive liquid waste containing technetium 17 is supplied to the liquid waste processing vessel 5 through the pilings 30 and 31. Subsequently, a reducing agent 2 and a photocatalyst 3A are supplied to the liquid waste processing vessel 5. For instance, ammonium carbonate as the reducing agents, and titanium oxide supporting platinum at surface as the photocatalyst 3A are used, respectively. Ethanol as an assistant reducing agent is supplied to the liquid waste processing vessel 5 from a tank which is not shown in FIG. 4. With agitating the acidic radioactive liquid waste mixed with the reducing agent 2, the photocatalyst 3A, and the assistant reducing agent by an agitator 19, light 18 is irradiated to the mixed solution from the light irradiation apparatus 44. As for the light, light released from Xenon lamp is used.

Owing to effects of the irradiated light, the reducing agent 2, and the photocatalyst 3A, technetium contained in the acidic radioactive liquid waste 17 in the liquid waste processing vessel 5 is reduced to a solid state, and is adsorbed onto the photocatalyst 3A. After the reduction and adsorption reaction are completed, the agitator 19 is stopped and the liquid waste is kept still. As technetium is precipitated with the photocatalyst 3A at the bottom portion of the liquid waste processing vessel 5. Subsequently, the supernatant liquid in the liquid waste processing vessel 5, that is processed liquid waste 4, is pumped out from the liquid waste processing vessel 5 by operating the pump 40. The photocatalyst 3A remained at the bottom portion of the liquid waste processing vessel 5 can be used in the next operation of the process without any handling. Or the photocatalyst 3A can be used for the same object as the embodiment 3 or any other objects after recovering and separating from technetium.

In accordance with the present embodiment, the same advantage as the embodiment 1 can be obtained. The embodiment 1 uses simpler composition of the apparatus than the present embodiment as much as no light irradiation apparatus 44 is used. However, in accordance with the present embodiment, the reducing reaction of technetium is enhanced more than the embodiment 1 because the photocatalyst 3A is used and light is irradiated. Accordingly, the solid state technetium contained in the acidic radioactive liquid waste 17 is adsorbed by the photocatalyst 3A in a short time.

Furthermore, recovered useful technetium can be utilized in an industrial field and in a research field.

The same advantage as the present embodiment can be realized with irradiation of electromagnetic waves such as radiation and the like instead of the light to the acidic radioactive liquid waste 17 mixed with the reducing agent 2 and the photocatalyst 3A in the liquid waste processing vessel 5. The photocatalyst 3A which adsorbed technetium can be separated from the liquid waste by arranging the valve with filter 7, or arranging a centrifuge. Although the filtration and the centrifugal separation require extra equipments and operations, the solid-liquid separation can be separated effectively.

### Embodiment 4

The fourth embodiment of the present invention is a case when the liquid waste processing vessel 5 is replaced with a column type processing apparatus. As shown in FIG. 5, the column 22 of the present embodiment has a porous plate 21 which is arranged at the lower end portion of inside the column, and catalysts 3 (for instance, palladium) are packed onto the porous plate 21. The piping 30 for supplying high level liquid waste 1 is connected to the upper end portion of the column 22. The piping 45 provided with a flow rate control valve 46 is connected to the piping 30.

High level liquid waste 1 flows through the piping 30. A mixed liquid of the reducing agent (for instance, ammonium carbonate) and the assistant reducing agent (for instance, ethanol) is supplied to inside the piping 30 through the piping 45. The flow rate of the mixed liquid is controlled by the flow rate control valve 46. The reducing agent and the assistant reducing agent are mixed in a predetermined ratio, and is stored in a tank which is not shown in FIG. 4. A mixed liquid of the high level liquid waste 1, the reducing agent, and the assistant reducing agent is supplied into the column 22. Technetium is reduced by the effect of the reducing agent and the catalyst 3 as same as the above other embodiments while the high level liquid waste passes through the column 22, and is adsorbed onto the catalyst 3. The processed liquid waste 4 released from the column 22 hardly contain technetium nor platinum group elements. Passing velocity of the high level liquid waste 1 through the column 22 must be controlled so that technetium is not released from the column. However, even if a larger amount of technetium than a desirable amount are contained in the processed liquid waste, it is possible to decrease the amount less than a desirable amount by re-passing the processed liquid waste through the column.

The high level liquid waste 1 can be supplied to the column continuously until an adsorbing capacity of the catalyst 3 for technetium and other elements is saturated or an activity of the catalyst is decreased. Further, when a plurality of columns 22 are prepared and operated alternately (exchange), a continuous operation for a long period becomes possible. Furthermore, alternate repeating reduction-adsorption of technetium (liquid waste processing) and re-dissolving-desorption (recovery of technetium) makes it possible to use a same column 22 and the catalyst 3 for a long period. When the column is made of transparent material such as quartz, irradiation of light from outside the column becomes possible, and consequently, reduction-separation efficiency of technetium can be improved.

The present embodiment can be applied to general radioactive liquid waste other than the high level liquid waste. When the acidity of the liquid waste is within a pH region, a very weak reducing agent is sufficient as the reducing agent.

The same advantages can be obtained by the present embodiment. Further, in the present embodiment, apparatus composition can be more compact than the embodiment 1. In accordance with the present embodiment, technetium in liquid waste can be separated continuously and removed effectively by relatively simple operating steps, and poisonous character of the liquid waste can be decreased significantly. An amount of poisonous waste can be decreased remarkably.

In accordance with the present invention, technetium in radioactive liquid waste can be separated and removed effectively and simply. Accordingly, such advantages are realized that poisonous character of a large amount of radioactive waste can be decreased and the amount of poisonous radioactive waste (technetium) can be decreased significantly. Furthermore, useful element such as technetium can be recovered and re-used.

## Claims

1. A method for separating technetium from radioactive liquid waste containing technetium by adding a reducing agent to said radioactive liquid waste for reducing said technetium in the presence of catalyst and said reducing agent to be solid state, and separating the solid state technetium from said liquid waste, characterized in that said reducing agent is at least one substance selected from ammonium salts, hydrazine salts and hydroxylamine salts.

2. A method for separating technetium as claimed in Claim 1, wherein
said catalyst is a photocatalyst, and
said radioactive liquid waste containing said reducing agent and said photocatalyst is irradiated with electromagnetic waves for reducing said technetium to be solid state.

3. A method for separating technetium as claimed in Claim 1, wherein
said radioactive liquid waste containing reducing agent is supplied to a column filled with said catalyst.

4. A method for separating technetium from radioactive liquid waste as claimed in any of claims 1, 2, and 3, wherein said solid state technetium is adsorbed onto said catalyst.

5. A method for separating technetium from radioactive liquid waste as claimed in any of claims 1, 2, and 3 wherein
said radioactive liquid waste containing said catalyst and said reducing agent exists in a vessel,
said technetium contained in said radioactive liquid waste is reduced to the solid state,
subsequently, said catalyst and said solid state technetium are removed from said radioactive liquid waste which is released from said vessel, by a separating means, and
raw radioactive liquid waste containing technetium is supplied to said vessel, and
said raw radioactive liquid waste contains said previously removed catalyst and said solid state technetium.

6. A method for separating technetium from radioactive liquid waste as claimed in Claim 5, wherein
said separating means is a filter, said catalyst and said solid state technetium are removed from said released radioactive liquid waste by filtration with said filter, and said removed catalyst and solid state technetium removed by said filter are introduced into said vessel with said raw radioactive liquid waste which is supplied into said vessel through said filter in a direction opposite to the current of said radioactive liquid waste released from said vessel.

7. A method for separating technetium from radioactive liquid waste as claimed in Claim 4, wherein
said catalyst which adsorbed said solid state technetium is separated by sedimentation, said radioactive liquid waste which is supernatant liquid in said vessel is released from said vessel, and said raw radioactive liquid waste containing technetium is supplied into said vessel wherein said catalyst exists.

## Patentansprüche

1. Verfahren zum Abtrennen von Technetium von Technetium enthaltendem flüssigen radioaktiven Abfall, wobei dem Abfall ein Reduktionsmittel zugesetzt wird, um das Technetium in Anwesenheit eines Katalysators und des Reduktionsmittels in den festen Zustand zu reduzieren, und das feste Technetium von dem flüssigen Abfall abgetrennt wird, dadurch **gekennzeichnet,** daß es sich bei dem Reduktionsmittel um mindestens eine der Substanzen Ammoniumsalze, Hydrazinsalze und Hydroxylaminsalze handelt.

2. Verfahren zum Abtrennen von Technetium nach Anspruch 1, wobei
der Katalysator ein Photokatalysator ist und
der das Reduktionsmittel und den Photokatalysator enthaltende flüssige radioaktive Abfall mit elektromagnetischen Wellen bestrahlt wird, um das Technetium in den festen Zustand zu reduzieren.

3. Verfahren zum Abtrennen von Technetium nach Anspruch 1, wobei der Reduktionsmittel enthaltende flüssige radioaktive Abfall einer mit dem Katalysator gefüllten Säule zugeführt wird.

4. Verfahren zum Abtrennen von Technetium von flüssigem radioaktiven Abfall nach einem der Ansprüche 1 bis 3, wobei das feste Technetium an den Katalysator adsorbiert wird.

5. Verfahren zum Abtrennen von Technetium von flüssigem radioaktiven Abfall nach einem der Ansprüche 1 bis 3, wobei
der den Katalysator und das Reduktionsmittel enthaltende flüssige radioaktive Abfall in einem Gefäß vorliegt,
das in dem flüssigen radioaktiven Abfall enthaltende Technetium in den festen Zustand reduziert wird,
anschließend der Katalysator und das feste Technetium mittels einer Trenneinrichtung von dem aus dem Gefäß abgegebenen flüssigen radioaktiven Abfall abgetrennt werden,
Technetium enthaltender flüssiger radioaktiver Rohabfall dem Gefäß zugeführt wird, und
der flüssige radioaktive Rohabfall den vorher entfernten Katalysator und das feste Technetium enthält.

6. Verfahren zum Abtrennen von Technetium von flüssigem radioaktiven Abfall nach Anspruch 5, wobei die Trenneinrichtung ein Filter ist, der Katalysator und das feste Technetium durch Filtration mit Hilfe des Filters aus dem abgegebenen flüssigen radioaktiven Abfall entfernt werden, und der entfernte Katalysator sowie das mit Hilfe des Filters entfernte feste Technetium in das Gefäß mit dem flüssigen radioaktiven Rohabfall eingeleitet werden, der dem Gefäß über das Filter in einer Richtung zugeführt wird, die zur Strömungsrichtung des von dem Gefäß abgegebenen flüssigen radioaktiven Abfalls entgegengesetzt ist.

7. Verfahren zum Abtrennen von Technetium von flüssigem radioaktiven Abfall nach Anspruch 4, wobei der Katalysator mit dem adsorbierten festen Technetium durch Sedimentation abgetrennt wird, der in dem Gefäß oben schwimmende flüssige radioaktive Abfall aus dem Gefäß abgegeben wird, und der Technetium enthaltende flüssige radioaktive Rohabfall dem Gefäß zugeführt wird, in dem der Katalysator vorliegt.

## Revendications

1. Procédé pour séparer du technétium d'un résidu liquide radioactif contenant du technétium, en ajoutant un agent réducteur audit résidu liquide radioactif pour réduire ledit technétium, en présence d'un catalyseur et dudit agent réducteur, et le mettre à l'état solide, et en séparant le technétium à l'état solide dudit résidu liquide, caractérisé en ce que ledit agent réducteur est au moins une substance choisie parmi les sels d'ammonium, les sels d'hydrazine et les sels d'hydroxylamine.

2. Procédé pour séparer du technétium selon la revendication 1, dans lequel ledit catalyseur est un photocatalyseur, et ledit résidu liquide radioactif contenant ledit agent réducteur et ledit photocatalyseur est irradié avec des ondes électromagnétiques pour réduire le technétium et le mettre à l'état solide.

3. Procédé pour séparer du technétium selon la revendication 1, dans lequel ledit résidu liquide radioactif contenant l'agent réducteur est alimenté à une colonne garnie avec ledit catalyseur.

4. Procédé pour séparer du technétium à partir d'un résidu liquide radioactif selon l'une quelconque des revendications 1, 2 et 3, dans lequel ledit technétium à l'état solide est adsorbé sur ledit catalyseur.

5. Procédé pour séparer du technétium à partir d'un résidu liquide radioactif selon l'une quelconque des revendications 1, 2 et 3, dans lequel
ledit résidu liquide radioactif contenant ledit catalyseur et ledit agent réducteur se trouve dans un récipient,
ledit technétium contenu dans ledit résidu liquide radioactif est réduit à l'état solide,
ensuite, ledit catalyseur et ledit technétium à l'état solide sont séparés dudit résidu liquide radioactif qui est éliminé dudit récipient, par un moyen de séparation, et
un résidu liquide radioactif brut contenant du technétium est alimenté audit récipient, et
ledit résidu liquide radioactif brut contient ledit catalyseur et ledit technétium à l'état solide préalablement séparés.

6. Procédé pour séparer du technétium à partir d'un résidu liquide radioactif selon la revendication 5, dans lequel
ledit moyen de séparation est un filtre, ledit catalyseur et ledit technétium à l'état solide sont séparés dudit résidu liquide radioactif éliminé, par filtration avec ledit filtre, et ledit catalyseur séparé et le technétium à l'état solide séparé par ledit filtre sont introduits dans ledit récipient avec ledit résidu liquide radioactif brut qui est alimenté dans ledit récipient à travers ledit filtre dans une direction opposée au courant dudit résidu liquide radioactif éliminé dudit récipient.

7. Procédé pour séparer du technétium à partir d'un résidu liquide radioactif selon la revendication 4, dans lequel ledit catalyseur qui a adsorbé ledit technétium à l'état solide est séparé par sédimentation, ledit résidu liquide radioactif qui est un surnageant liquide dans ledit récipient est séparé dudit récipient, et ledit résidu liquide radioactif brut contenant le technétium est alimenté dans ledit récipient dans lequel se trouve ledit catalyseur.
